# EUROPEAN PATENT SPECIFICATION

(11) **EP 3 277 464 B1**
(45) Date of publication and mention of the grant of the patent: **27.11.2019**
(21) Application number: 16712336.3
(22) Date of filing: 30.03.2016
(51) Int. Cl.: B25B 21/00, B25B 23/147, B25F 5/00

(54) **POWER TOOL WITH OUTPUT TORQUE COMPENSATION AND METHOD THEREFORE**
ELEKTROWERKZEUG MIT AUSGANGSDREHMOMENTKOMPENSATION UND VERFAHREN DAFÜR
OUTIL DE PUISSANCE AVEC COMPENSATION DE COUPLE DE SORTIE ET PROCÉDÉ S'Y RAPPORTANT

(30) Priority: 02.04.2015 SE 1550400
(43) Date of publication of application: 07.02.2018
(73) Proprietor: Atlas Copco Industrial Technique AB, 105 23 Stockholm Sweden (SE)
(72) Inventor: FORSBERG, Per Ingemar, 13935 Värmdö (SE); SUNDBERG, Klas Erik, 13148 Nacka (SE)
(74) Representative: Tholin, Thomas
(86) International application number: PCT/EP2016/056908
(87) International publication number: WO 2016/156388

(56) References cited:
- WO-A1-2010/142318
- WO-A1-2011/152136
- WO-A1-2014/000772

## Description

The invention relates to a torque delivering power tool in which the output torque is compensated for variations in the torque transfer along the power line inside the power tool. The invention also relates to a method of compensating the output torque in such a power tool.

### Background

In industrial use of torque delivering power tools such as power wrenches and nutrunners that are used for tightening joints it is important to monitor the applied torque in order to verify that the joints are fastened to a satisfactory degree. It is often desired to install a predetermined clamp force into a joint. Normally it is however difficult to monitor the clamp force and it is therefore common practice to instead control a tightening so as to install a specific target torque in a joint.

Power tools are known from e.g. WO 2011/152136 A1, WO 2010/142318 A1 and WO 2014/000772 A1.

A difficulty related to the monitoring of a delivered torque is that there are losses due to friction in the joint and due to gear ripple and the like inside the tool that affects the accuracy of the monitoring values in an unpredictable manner. The friction in a joint may vary largely between different joints, but it may be presumed to be constant for a specific joint at specific conditions, and there are manners of estimating the friction for a specific joint, both by empiric testing or by real time monitoring during the tightening of a joint.

The variations that are due to gear ripple and the like inside the tool are more difficult to predict. One way of eliminating these problems is to locate a torque meter as close to the joint as possible, i.e. on the output shaft. There is however a conflicting desire to minimise the size of the power tool in general and specifically to minimise the number of delicate components in the vicinity of the output shaft.

Hence, there is a need of a torque delivering power tool which is adapted to deliver a precise output torque but which does not involve a lot of delicate components in the vicinity of the output shaft.

### Summary of the invention

An object of the invention is to provide a torque delivering power tool in which the output torque and a method for delivering a precise output torque with less variations due to gear ripple and the like. This object is achieved by the invention according to a first and a second aspect.

According to a first aspect the invention relates to a torque delivering power tool according to claim 1.

By controlling the motor in accordance with a mapping function corresponding to a torque transmission over the at least one gear of the power line the output torque is compensated, such that its variations due to gear ripple and the like is compensated for and a more precise output torque is achieved.

In a specific embodiment of the inventive torque delivering power tool the angle meter is comprised in the motor, monitoring an angular rotation of a motor shaft directly driven by the motor.

In another specific embodiment of the inventive torque delivering power tool the torque meter is comprised in the motor monitoring the torque acting in an input side of the power line.

In yet another embodiment of the inventive torque delivering power tool an auxiliary index meter is arranged, such that an index meter is arranged at both the input shaft and the output shaft, wherein the absolute angular position of the input shaft and the absolute angular position of the output shaft are monitored.

According to a second aspect the invention relates to a method in a torque delivering power tool (10) for compensating a torque output for a gear ripple over a power line according to claim 6.

In a specific embodiment of the inventive method the step of monitoring an angular index position comprises the sub-steps of monitoring an angular index position of both the input shaft and the output shaft.

Other features and advantages of the invention will be apparent from the figures and from the detailed description of the shown embodiment.

### Short description of the drawings

In the following detailed description reference is made to the accompanying drawings, of which:
**Fig. 1** is a schematic view of a torque delivering power tool according to a specific embodiment of the invention;
**Fig. 2** is a diagram showing a typical dependency of the output torque from a constant input torque over a full rotation of a gear;
**Fig. 3** is a diagram showing the output torque as a function of an increasing input torque close to a target torque;
**Fig. 4** is a diagram showing the output torque as a function of a compensated input torque over a full rotation of a gear;
**Fig. 5** is a diagram showing a typical dependency of the output torque from a constant input torque over seventeen rotations of a gear; and
**Fig. 6** is a diagram showing the output torque as a function of a compensated input torque over seventeen rotations of a gear.

### Detailed description of the shown embodiment of the invention

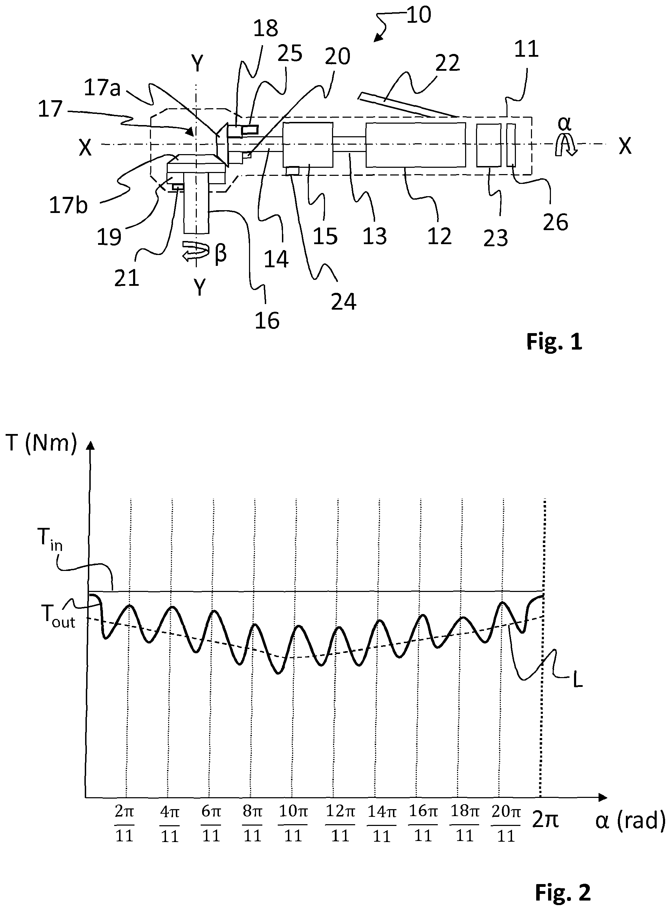

In fig. 1 a torque delivering power tool 10 according to a specific embodiment of the invention is schematically shown.

The power tool 10 includes a housing 11, which encloses a motor 12 that drives a motor shaft 13. A trigger 22 is arranged to govern the function of the motor 12. The motor 12 is arranged to drive an output shaft via a power line. The power line includes an input part and an output part, which are separated by a gear 17. In the embodiment shown in fig. 1 the input part 14 includes an input shaft and the output part includes an output shaft 16.

The motor shaft 13 is drivingly connected to an input shaft 14, via a reduction gearing 15. The reduction gearing 15 may typically be a planetary gear. In a specific embodiment the reduction gearing 15 may be omitted such that the motor shaft 13 is directly connected to the input shaft 14.

As indicated above the input shaft 14 is connected to an output shaft 16 via a gear 17. In the shown embodiment the gear 17 is an angle gear. The gear may however also be an off-set gear, a planet gear, or even a crow foot. Typically, the gear may be anything that connects an input part to an output part. The gear 17 of the shown embodiment comprises an input bevel gear 17a, which is an end part of the input shaft and an output bevel gear 17b, which is an end part of the output shaft 16. The input shaft 14 is journalled in bearings 18 and the output shaft 16 is journalled in bearings 19. In the shown embodiment two index meters are arranged to monitor the angular absolute position of the input shaft 14 and the output shaft 16. An input index meter 20 is arranged to monitor the angular absolute position of the input shaft 14 and an output index meter 21 is arranged to monitor the angular absolute position of the output shaft 16.

The power tool further comprises a control unit 23, which inter alia is arranged to control the power output of the motor 12. The monitoring of the angular absolute positions of the input and output shafts 14 and 16, respectively, are provided to the control unit 23 and taken into account for the controlling of the power output.

A torque meter 24 is arranged to monitor the torque along the power line from the motor to the output shaft. In the shown embodiment the torque meter 24 is arranged to measure the torque between the reduction gearing 15 and the housing 11. The torque meter 24 is arranged in the input part of the power line to monitor the torque acting in the input part of the power line. The torque may be an integral part of the motor. The torque meter 24 is connected to the control unit 23 for allowing the motor to be controlled by the control unit 23 in response to the monitored torque.

In addition to the index meters 20 and 21, an angle meter 25 is arranged to monitor the rotation of at least one of the input shaft 14 and the output shaft 16. In the shown embodiment the angle meter 25 is arranged to monitor the rotation of the input shaft 14. This is advantageous as it does not imply any space demanding instruments close to the output shaft 16.

A general idea of the invention is to compensate the motor output for known inherit gear ripples and/or asymmetric gear revolutions. This may be done in that data describing the natural variation of the torque transfer over the power line is stored in a memory unit 26 that is connected to the control unit.

In the simplest embodiment of the invention the power tool comprises one torque meter 24, one angle meter 25 and one index meter 20 or 21.

In a method according to the invention of the simplest embodiment the following steps are comprised:
- driving an input shaft by a motor, the input shaft being drivingly connected to an output shaft over a power line including at least one gear 17,
- monitoring an angular rotation of either the input shaft 14 or the output shaft 16,
- monitoring an angular index position of either the input shaft 14 or the output shaft 16 so as to obtain an absolute angle of said shaft,
- compensating a torque output of the motor in accordance with a mapping function corresponding to an angular index position dependent torque transmission over the power line, in order to compensate an output torque from the output shaft for angular variation of torque transmission over the power line.

By means of this method it is possible to deliver a more precise and a more accurate torque output. In a specific embodiment both the angle meter and the index meter are arranged to continuously monitor the rotation and position of the input shaft 14. In such an embodiment the control unit 23 of the power tool will continuously be updated on the absolute position α of the input shaft 14. A mapping function is stored in the memory unit 26 reflecting the natural variation of the torque transfer over the power line due to irregularities on the input bevel bear 17a. Typically, the torque transfer varies in dependency of the inerit gear ripple and an asymmetry or non-concentricity of the input bevel gear 17a. The gear ripple produces a periodic curve for each tooth on the gear. Any asymmetry or non-concentricity of the gear will produce a periodic variation of the torque transfer that will repeat itself for each revolution of the input bevel bear 17a.

It is possible to plot the output torque **Tₒᵤₜ** as a function of the input torque **Tᵢₙ** and of the angular position **α** of the input bevel gear. This dependency may be made for several different torque levels to monitor if there is also a dependency on the torque level.

Figure 2 shows a diagram of the torque **T** as a function of the angular position **α** of the input bevel gear 17a. A typical plot of the output torque **Tₒᵤₜ** as a function of a constant input torque **Tᵢₙ** is schematically shown. In a typical embodiment the input bevel gear 17a has eleven teeth. As a consequence, as is apparent in the plot, the output torque **Tₒᵤₜ** has the shape of a wave with 11 crests and 11 troughs. The crests correspond to points where the input bevel gear 17a has a good contact with the output bevel gear 17b, and the troughs correspond to points where the input bevel gear 17a has a somewhat worse contact with the output bevel gear 17b. In addition to this variation corresponding to the gear ripple there may also be a general trend in the curve depending on the asymmetry or non-concentricity of the input bevel gear 17a. This general trend is indicated in figure 2 by the dotted line **L.**

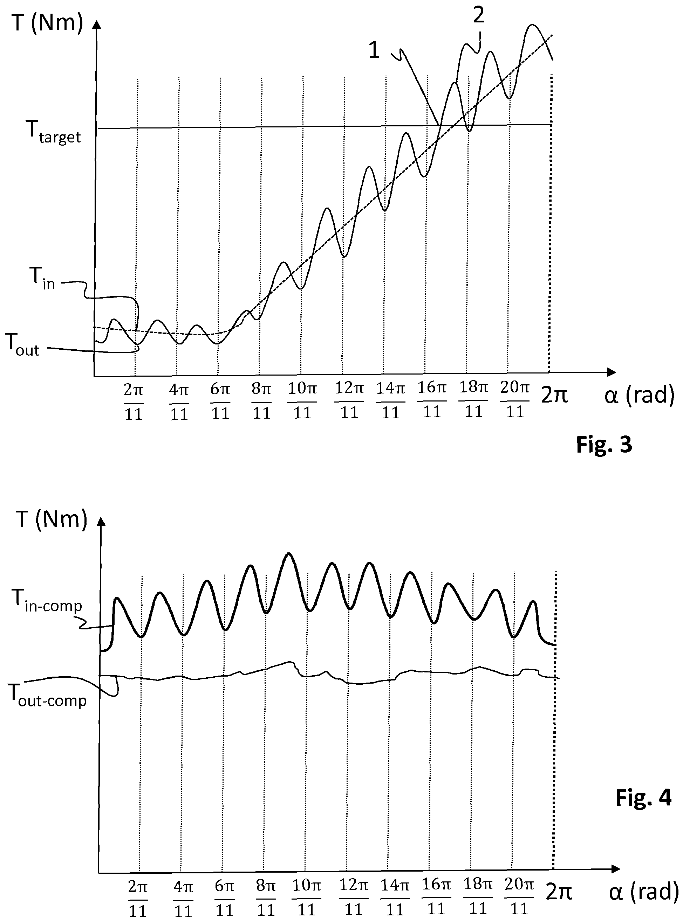

Figure 3 is a very schematic illustration of an output torque **Tₒᵤₜ** as a function of the angular position **α** of the input gear 14. In the illustration in figure 3 the output torque **Tₒᵤₜ** is been centered around the input torque **Tᵢₙ.** In a conventional power wrench where the motor is controlled on basis of signals from a torque meter arranged on input shaft, coupled to the output shaft via a gear, the tightening operation would be concluded at point 2, at which point the torque meter indicates that the target torque **T_{target}** has been met. However, as is exaggeratedly indicated in figure 3, the actual torque level at point 2 is well over the desired target torque **T_{target}.**

Based on the mapping function describing the torque transmission over the power line as a function of the angular position **α** of the input gear 14 the tightening operation may be concluded at a point 1 where the delivered torque more closely corresponds to the desired target torque **T_{target}.**

In a more sophisticated version of the invention the mapping function is not only based on the angular position **α** of the input gear 14, but also on the angular position **β** of the output gear 16. This is described below with reference to a second embodiment of the invention. In the second embodiment the control unit 23 is arranged to control the motor 12 in a manner that compensates for variation of the torque transmission over the power line as a function of the angular position **α** and/or **β** of the input gear 14 and/or the output gear 16.

As an alternative to the compensation described in relation to fig. 3 the dependency shown in figure 2 may also be compensated for by varying the input torque **Tᵢₙ** in a corresponding degree so as to achieve an output torque **Tₒᵤₜ** that is substantially constant or at least less prone to variation. This is achieved in that a compensation curve or compensation table is stored in the memory unit 26 and that the control unit 23 governs the motor 12 as a function of the desired output torque **Tₒᵤₜ** and the angular position **α** of the input shaft 14.

To achieve this compensation the control unit 23 needs to receive data corresponding the current angular absolute position of the input bevel gear 17a or the integrated input shaft 14. In one embodiment the power tool 10 includes an angle meter that monitors the angular position **α** of the input shaft 14 at all times, i.e. even when the power tool is at rest. With such an angle meter the absolute position of the input shaft 14 will be known directly when the tool is turned on. Such a solution will of course need to involve a continuous power source, such as a back-up battery, that powers the angle meter even when the tool is shut off. Most angle meters are however arranged to simply monitor angular movement of the shaft on which it is arranged and are not arranged to keep track of an absolute angular position of said shaft. Such an angle meter will hence not provide any information on the absolute angular position of the shaft. Therefore the power tool will need to be provided with an index meter that is arranged to keep track on the angular position of the shaft. The index meter 20 may be an integral part of the angle meter 25 or it may be arranged as a separate part. The angle meter 25 may also be an integrated part of the motor 12.

Figure 4 is a schematic illustration of a compensated output torque **T_{out-comp}** as a function of the angular position **α** over 17 full rotations of the input gear 14. In the illustration in figure 3 the input torque is a compensated input torque **T_{in-comp}** adapted to provide a compensated output torque **T_{out-comp}** that is as free from variation as possible. Theoretically, it is possible to control the output torque **Tₒᵤₜ** by means of a correspondence curve of the output torque **Tₒᵤₜ** as a function of the current provided to the motor. For a better accuracy it is however desired to have a torque meter arranged on the input part of the power line.

In the method described in relation to fig. 3 above, the torque output **Tₒᵤₜ** is only compensated for discrepancies related to the input shaft 14. Normally, there are however also variations in the torque transmission that depend on irregularities on the output shaft 16 and the output bevel gear 17b. Often, the output bevel gear 17b has more teeth than the input bevel gear 17a, such that the gear 17 forms a reduction gearing. In a typical torque delivering power tool the input bevel gear 17a has eleven teeth and the output bevel gear 17b has seventeen teeth. The variations in the torque transmission that depend on irregularities on the output bevel gear 17b will not be compensated for in a method in relation to fig. 3, which only takes the absolute angular position α of the input shaft 14 into account.

In a power tool where an angle meter is continuously monitoring the angular position, i.e. even when the tool is turned off, it is possible to also keep track of the rotational position of the output shaft 16 with the index meter 20 and the angle meter 25 arranged on the input shaft 14. In such an embodiment it will be possible to compensate for irregularities in the torque transmission that depend on both the input bevel gear 17a and the output bevel gear 17b. This may be done by monitoring of the torque transmission over all the possible tooth interactions, i.e. over seventeen full rotations of the input shaft 14. When the input shaft 14 has rotated 17 full laps the output shaft 16 will have rotated 11 full laps and a new cycle will commence. An exemplary diagram showing the torque output **Tₒᵤₜ** as a function of the absolute angular position **α** of the input shaft 14 over 17 rotations, i.e. 17*360 degrees, or 17*2π rad, is shown in figure 4.

As an alternative to the full time absolute angle meter a second index meter 21 may be arranged on the output shaft 16 so as to keep track of the absolute angular position **β** of the output shaft 16. No additional angle meter is needed, because the control unit will be able to calculate the angular position **β** of the output shaft 16. Further, as soon as both index meters 20 and 21 have signalled their position the control unit 23 will, by means of data retrieved from the one angle meter, be able to determine the mutual position of the input shaft 14 and the output shaft 16, and hence it will be possible to determine the absolute angular position **α** of the input shaft 14 along a curve corresponding to seventeen full rotations of said input shaft 14.

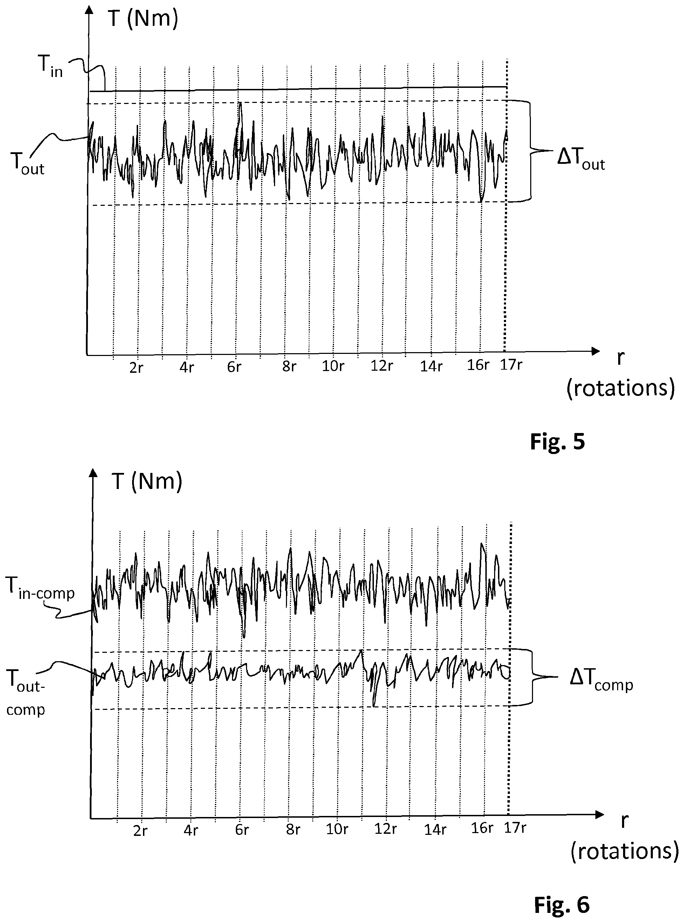

Figure 5 is a diagram showing the output torque **Tₒᵤₜ** as a function of a constant input torque **Tᵢₙ** over 17 rotations of the input shaft, i.e. 17*2π rad. As is visible in the diagram the output torque **Tₒᵤₜ** varies substantially over the 17 rotations of the input shaft. An indication of variation of the output torque **Tₒᵤₜ** is given by a delta Torque **ΔTₒᵤₜ** that represents the difference between the highest and the lowest torque peaks over the 17 rotations of the input shaft.

In figure 6 a similar representation is shown for a compensated input torque **T_{in-comp}** over 17 rotations of the input shaft. It is apparent that the compensated output torque **T_{out-comp}** also varies over 17 rotations, but it is noticeable that the compensated delta Torque **ΔT_{comp}** is roughly 50% smaller than the uncompensated delta Torque **ΔTₒᵤₜ** shown in figure 4. The magnitude by which the delta Torque **ΔTₒᵤₜ** may be reduced is dependent on a lot of parameters, such as the accuracy of the compensated input torque **T_{in-comp},** the accuracy of the motor, the control unit and so on. Such parameters will be easily tested and refined by a person skilled in the art. The speed of the operation is also a factor. The slower the operation is the more effective it will be to compensate the input torque **T_{in-comp}** so as to achieve an even and reliable compensated output torque **T_{out-comp}.** In a rapid operation it may be more effective to simply monitor the output torque **Tₒᵤₜ** as a function of the mapping function.

Above, the invention has been described with reference to specific embodiments. The invention is however not limited to these embodiments. It is obvious to a person skilled in the art that the invention comprises further embodiments within its scope of protection, which is defined by the following claims.

## Claims

1. A torque delivering power tool (10) comprising:
- a power line driven by a motor (12), the power line including an input part with an input shaft(14), an output part with an output shaft (16), and at least one gear (17), the input shaft (14) being drivingly connected to the output shaft (16) via the at least one gear (17), and wherein a motor shaft (13) is drivingly connected to the input shaft (14), via a reduction gearing (15),
- a torque meter (24) for monitoring the torque acting in at least one point along the power line, the torque meter being arranged along the input part of the power line, and
- an angle meter (25) for monitoring an angular rotation in the power line, **characterised in that** the torque delivering power tool further comprises an index meter (20) for monitoring an absolute angular position (α, β) of either the input shaft (14) or the output shaft (16), wherein a control unit (23) is arranged to receive information from the angle meter (25), torque meter (24), and index meter (20) and controlling a torque output of the motor in accordance with a mapping function corresponding to an angular index position dependent torque transmission over the power line, in order to deliver an output torque from the output shaft (16) that is compensated for angular variation of the torque transmission over the power line.

2. The torque delivering power tool according to claim 1, wherein the angle meter is comprised in the motor (12), monitoring an angular rotation of the motor shaft (13) directly driven by the motor (12).

3. The torque delivering power tool according to either of claims 1 or 2, wherein the torque meter (24) is comprised in the motor (12) monitoring the torque acting in an input side of the power line.

4. The torque delivering power tool according to anyone of the preceding claims, wherein an auxiliary index meter (21) is arranged, such that an index meter is arranged at both the input shaft (14) and the output shaft (16), wherein the absolute angular position (α) of the input shaft (14) and the absolute angular position (β) of the output shaft (16) are monitored.

5. The torque delivering power tool according to anyone of the claims 1-3, wherein the angle meter (25) and the index meter (20) are integrated in one unit and wherein a power source is arranged to continuously power said unit, such that the absolute angular position (α, β) of either the input shaft (14) or the output shaft (16) is continuously monitored.

6. A method in a torque delivering power tool (10) for compensating a torque output for a gear ripple over a power line including an input shaft (14), an output shaft (16) and at least one gear (17) arranged between the input shaft (14) and the output shaft (16), and wherein a motor shaft (13) is drivingly connected to the input shaft (14), via a reduction gearing (15), the method comprising the steps of:
- driving the input shaft (14) by a motor, the input shaft (14) being drivingly connected to the output shaft (16) over a power line including the at least one gear (17),
- monitoring an angular rotation of either the input shaft (14) or the output shaft (16), **characterized by**
- monitoring an angular index position of either the input shaft (14) or the output shaft (16) so as to obtain an absolute angular position (α, β) of said shaft,
- controlling a torque output of the motor in accordance with a mapping function corresponding to an angular index position dependent torque transmission over the power line, in order to deliver an output torque from the output shaft (16) that is compensated for angular variation of the torque transmission over the power line.

7. The method of claim 6, wherein the step of monitoring an angular index position comprises the sub-steps of monitoring an angular index position of both the input shaft (14) and the output shaft (16).

## Patentansprüche

1. Drehmoment abgebendes Elektrowerkzeug (10), umfassend:
- eine Stromleitung, die durch einen Motor (12) angetrieben ist, wobei die Stromleitung einen Eingangsteil mit einer Eingangswelle (14), einen Ausgangsteil mit einer Ausgangswelle (16) und mindestens ein Zahnrad (17) aufweist, wobei die Eingangswelle (14) über das mindestens eine Zahnrad (17) antriebsmäßig mit der Ausgangswelle (16) verbunden ist und wobei eine Motorwelle (13) über ein Reduktionsgetriebe (15) antriebsmäßig mit der Eingangswelle (14) verbunden ist,
- einen Drehmomentmesser (24) zum Überwachen des Drehmoment, das an mindestens einem Punkt entlang der Stromleitung wirkt, wobei der Drehmomentmesser entlang des Eingangsteils der Stromleitung angeordnet ist, und
- einen Winkelmesser (25) zum Überwachen einer winkeligen Drehung in der Stromleitung, **dadurch gekennzeichnet, dass** das Drehmoment abgebende Elektrowerkzeug weiter einen Indexmesser (20) zum Überwachen einer absoluten Winkelposition (α, β) entweder der Eingangswelle (14) oder der Ausgangswelle (16) umfasst, wobei eine Steuereinheit (23) dafür angeordnet ist, Informationen von dem Winkelmesser (25), dem Drehmomentmesser (24) und dem Indexmesser (20) zu erhalten und einen Drehmomentausgang des Motors in Übereinstimmung mit einer Mapping-Funktion zu steuern, die einer Drehmomentübertragung über die Stromleitung in Abhängigkeit einer Winkelindexposition entspricht, um ein Ausgangsdrehmoment von der Ausgangswelle (16) abzugeben, bei dem eine winkelige Abweichung der Drehmomentübertragung über die Stromleitung kompensiert ist.

2. Drehmoment abgebendes Elektrowerkzeug nach Anspruch 1, wobei der Winkelmesser in dem Motor (12) enthalten ist und eine winkelige Drehung der Motorwelle (13) überwacht, die direkt durch den Motor (12) angetrieben ist.

3. Drehmoment abgebendes Elektrowerkzeug nach Anspruch 1 oder 2, wobei der Drehmomentmesser (24) in dem Motor (12) enthalten ist und das Drehmoment überwacht, das an einer Eingangsseite der Stromleitung wirkt.

4. Drehmoment abgebendes Elektrowerkzeug nach einem der vorhergehenden Ansprüche, wobei ein zusätzlicher Indexmesser (21) angeordnet ist, sodass sowohl an der Eingangswelle (14) als auch der Ausgangswelle (16) ein Indexmesser angeordnet ist, wobei die absolute Winkelposition (α) der Eingangswelle (14) und die absolute Winkelposition (β) der Ausgangswelle (16) überwacht werden.

5. Drehmoment abgebendes Elektrowerkzeug nach einem der Ansprüche 1-3, wobei der Winkelmesser (25) und der Indexmesser (20) in einer Einheit integriert sind und wobei eine Stromquelle angeordnet ist, um die Einheit fortlaufend mit Strom zu versorgen, sodass die absolute Winkelposition (α, β) entweder der Eingangswelle (14) oder der Ausgangswelle (16) fortlaufend überwacht wird.

6. Verfahren in einem Drehmoment abgebenden Elektrowerkzeug (10) zum Kompensieren eines Drehmomentausgangs für eine Riffelbildung eines Zahnrads über eine Stromleitung, die eine Eingangswelle (14), eine Ausgangswelle (16) und mindestens ein zwischen der Eingangswelle (14) und der Ausgangswelle (16) angeordnetes Zahnrad (17) aufweist, und wobei eine Motorwelle (13) über ein Reduktionsgetriebe (15) antriebsmäßig mit der Eingangswelle (14) verbunden ist, wobei das Verfahren die folgenden Schritte umfasst:
- Antreiben der Eingangswelle (14) durch einen Motor, wobei die Eingangswelle (14) über eine Stromleitung, die das mindestens eine Zahnrad (17) aufweist, antriebsmäßig mit der Ausgangswelle (16) verbunden ist,
- Überwachen einer winkeligen Drehung entweder der Eingangswelle (14) oder der Ausgangswelle (16), **gekennzeichnet durch**
- Überwachen einer Winkelindexposition entweder der Eingangswelle (14) oder der Ausgangswelle (16), um eine absolute Winkelposition (α, β) der Welle zu erhalten,
- Steuern eines Drehmomentausgangs des Motors in Übereinstimmung mit einer Mapping-Funktion, die einer Drehmomentübertragung über die Stromleitung in Abhängigkeit einer Winkelindexposition entspricht, um ein Ausgangsdrehmoment von der Ausgangswelle (16) abzugeben, bei dem eine winkelige Abweichung der Drehmomentübertragung über die Stromleitung kompensiert ist.

7. Verfahren nach Anspruch 6, wobei der Schritt des Überwachens einer Winkelindexposition die Teilschritte des Überwachens einer Winkelindexposition sowohl der Eingangswelle (14) als auch der Ausgangwelle (16) umfasst.

## Revendications

1. Outil électrique de distribution de couple (10) comprenant :
- une ligne de puissance entraînée par un moteur (12), la ligne de puissance comprenant une partie d'entrée avec un arbre d'entrée (14), une partie de sortie avec un arbre de sortie (16), et au moins un engrenage (17), l'arbre d'entrée (14) étant relié à entraînement à l'arbre de sortie (16) par l'intermédiaire de l'au moins un engrenage (17), et un arbre de moteur (13) étant relié à entraînement à l'arbre d'entrée (14) par l'intermédiaire d'un démultiplicateur (15),
- un dispositif de mesure de couple (24) pour surveiller le couple agissant en au moins un point le long de la ligne de puissance, le dispositif de mesure de couple étant agencé le long de la partie d'entrée de la ligne de puissance, et
- un dispositif de mesure d'angle (25) pour surveiller une rotation angulaire dans la ligne de puissance, **caractérisé par le fait que** l'outil électrique de distribution de couple comprend en outre un dispositif de mesure d'indexage (20) pour surveiller une position angulaire absolue (α, β) soit de l'arbre d'entrée (14) soit de l'arbre de sortie (16), une unité de commande (23) étant agencée pour recevoir des informations provenant du dispositif de mesure d'angle (25), du dispositif de mesure de couple (24) et du dispositif de mesure d'indexage (20) et commander une sortie de couple du moteur selon une fonction de mise en correspondance correspondant à une transmission de couple, sur la ligne de puissance, dépendant de la position d'indexage angulaire, afin de distribuer un couple de sortie à partir de l'arbre de sortie (16) qui est compensé en variation angulaire de la transmission de couple sur la ligne de puissance.

2. Outil électrique de distribution de couple selon la revendication 1, dans lequel le dispositif de mesure d'angle est inclus dans le moteur (12), surveillant une rotation angulaire de l'arbre de moteur (13) entraîné directement par le moteur (12).

3. Outil électrique de distribution de couple selon l'une des revendications 1 ou 2, dans lequel le dispositif de mesure de couple (24) est inclus dans le moteur (12) surveillant le couple agissant sur un côté d'entrée de la ligne de puissance.

4. Outil électrique de distribution de couple selon l'une quelconque des revendications précédentes, dans lequel un dispositif de mesure d'indexage auxiliaire (21) est agencé de telle sorte qu'un dispositif de mesure d'indexage est agencé à la fois à l'arbre d'entrée (14) et à l'arbre de sortie (16), la position angulaire absolue (α) de l'arbre d'entrée (14) et la position angulaire absolue (β) de l'arbre de sortie (16) étant surveillées.

5. Outil électrique de distribution de couple selon l'une quelconque des revendications 1 à 3, dans lequel le dispositif de mesure d'angle (25) et le dispositif de mesure d'indexage (20) sont intégrés dans une unité et une source d'alimentation est agencée pour alimenter ladite unité de manière continue, de telle sorte que la position angulaire absolue (α, β) de l'arbre d'entrée (14) ou de l'arbre de sortie (16) est surveillée de manière continue.

6. Procédé dans un outil électrique de distribution de couple (10) pour compenser une sortie de couple pour une ondulation d'engrenage sur une ligne de puissance comprenant un arbre d'entrée (14), un arbre de sortie (16) et au moins un engrenage (17) agencé entre l'arbre d'entrée (14) et l'arbre de sortie (16), et un arbre de moteur (13) étant relié à entraînement à l'arbre d'entrée (14) par l'intermédiaire d'un démultiplicateur (15), le procédé comprenant les étapes :
- entraîner l'arbre d'entrée (14) par un moteur, l'arbre d'entrée (14) étant relié à entraînement à l'arbre de sortie (16) sur une ligne de puissance comprenant l'au moins un engrenage (17),
- surveiller une rotation angulaire de l'arbre d'entrée (14) ou de l'arbre de sortie (16), **caractérisé par**
- surveiller une position d'indexage angulaire de l'arbre d'entrée (14) ou de l'arbre de sortie (16) de façon à obtenir une position angulaire absolue (α, β) dudit arbre,
- commander une sortie de couple du moteur selon une fonction de mise en correspondance correspondant à une transmission de couple, sur la ligne de puissance, dépendant de la position d'indexage angulaire, afin de distribuer un couple de sortie à partir de l'arbre de sortie (16) qui est composé en variation angulaire de la transmission de couple sur la ligne de puissance.

7. Procédé selon la revendication 6, dans lequel l'étape de surveillance d'une position d'indexage angulaire comprend les sous-étapes de surveillance d'une position d'indexage angulaire de l'arbre d'entrée (14) et de l'arbre de sortie (16).
